(19) Europäisches Patentamt
European Patent Office
Office européen des brevets

(11) **EP 3 049 688 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **14755350.7**

(22) Anmeldetag: **20.08.2014**

(51) Int Cl.:
***F16D 48/06*** (2006.01)

(86) Internationale Anmeldenummer:
**PCT/EP2014/067748**

(87) Internationale Veröffentlichungsnummer:
**WO 2015/043841 (02.04.2015 Gazette 2015/13)**

(54) **VERFAHREN ZUM BETREIBEN EINES ANTRIEBSSTRANGS MIT EINER HYDRODYNAMISCHEN KUPPLUNG**

METHOD FOR OPERATING A DRIVE TRAIN HAVING A HYDRODYNAMIC CLUTCH

PROCÉDÉ POUR FAIRE FONCTIONNER UNE CHAÎNE CINÉMATIQUE ÉQUIPÉE D'UN DISPOSITIF D'ACCOUPLEMENT HYDRODYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2013 DE 102013219180**

(43) Veröffentlichungstag der Anmeldung:
**03.08.2016 Patentblatt 2016/31**

(73) Patentinhaber: **Voith Patent GmbH**
**89522 Heidenheim (DE)**

(72) Erfinder:
• BRUNNER, Stefan
  **91555 Feuchtwangen (DE)**
• HELLINGER, Frank
  **74653 Künzelsau (DE)**

(74) Vertreter: **Voith Patent GmbH - Patentabteilung**
**St. Pöltener Straße 43**
**89522 Heidenheim (DE)**

(56) Entgegenhaltungen:
WO-A1-03/087614       DE-A1-102004 006 358
DE-A1-102005 042 363   DE-A1-102006 009 608

EP 3 049 688 B1

**Beschreibung**

Die Erfindung betrifft ein Verfahren zum Betreiben eines Antriebsstrangs mit einer hydrodynamischen Kupplung bzw. einer Turbokupplung nach der im Oberbegriff von Anspruch 1 näher definierten Art.

Ein Antriebsstrang gemäß dem Oberbebgriff des Hauptanspruchs ist aus dem allgemeinen Stand der Technik bekannt. Er besteht typischerweise aus einer primären Antriebsmaschine, welche über eine hydrodynamische Kupplung eine Arbeitsmaschine antreibt. Er kann beispielsweise im Rahmen von industriellen Antriebsanwendungen, insbesondere zum Antreiben von Gurtförderern, Crashern oder ähnlichen, eingesetzt werden.

Eine hydrodynamische Kupplung bzw. Turbokupplung, welche in dem Antriebsstrang gemäß dem Oberbegriff des Anspruchs 1 betrieben werden kann, ist beispielsweise aus der DE 10 2004 006 358 B4 bekannt. Die dort beschriebene Turbokupplung weist eine in diesem Fall berührungslos ausgeführte Temperaturmesseinrichtung auf, sodass oberhalb einer vorgegebenen Maximaltemperatur die primäre Antriebsmaschine, über welche mittels der Kupplung die Arbeitsmaschine angetrieben wird, in ihrer Leistung reduziert oder insbesondere abgeschaltet wird.

Der Vorteil, insbesondere wenn eine berührungslose thermische Messeinrichtung gemäß der genannten deutschen Patentschrift eingesetzt wird, liegt darin, dass die Temperaturmessung direkt im Betriebsmedium erfolgt und deshalb Temperaturänderungen, welche immer mit Belastungsänderungen des Antriebsstrangs einhergehen, sehr schnell erkannt werden können. Durch diese sehr direkte Verfügbarkeit der Temperaturwerte und damit einhergehender Lastzustände wird es insbesondere möglich, in verschiedenen Warnstufen den Anlagenbediener entsprechend zu informieren, sodass dieser die Belastung reduzieren oder ganz wegnehmen kann, bevor eine thermische Überlastung der hydrodynamischen Kupplung auftritt.

Aus der DE 10 2994 006 358 A1 ist es bekannt für eine Kriechfunktion eine Schutzstrategie für die Kupplung zur Reduzierung der thermischen Belastung vorzusehen. Dabei kann vor einem Abschalten des Motors in Abhängigkeit von einer erfassten Kupplungstemperatur eine Fahrerwarnung vorgesehen sein.

Auch aus der WO 03/087614 ist ein Antriebsstrang mit einer Reibungskupplung mit einer Regelung zur Realisierung einer Kriechfunktion bekannt, bei dem bei dem bei Erreichen eines vorgegebenen Grenzwertes von zumindest einer Motor- und/oder Getriebegröße ein Warnsignal als Fahrerwarnung ausgegeben wird und/oder die Kupplungsübertragungseigenschaften angepasst werden.

Ein grundsätzliches Problem bleibt jedoch bestehen. Für den Fall dynamischer Änderungen von Betriebszuständen oder Lastzuständen, insbesondere wenn die Anlage aufgrund einer thermischen Überlastung der hydrodynamischen Kupplung abgeschaltet werden musste, besteht die Gefahr, dass im Falle eines erneuten Starts der Anlage sehr schnell wieder eine thermische Überlastung auftritt, da ein Start der Anlage immer mit einem entsprechenden Temperaturanstieg in der hydrodynamischen Kupplung verbunden ist. Dieser über den Start typischerweise auftretende Temperaturanstieg kann dann, insbesondere bei noch nicht ausreichend abgekühlter Anlage dafür sorgen, dass nach dem Start sehr schnell wieder eine Notabschaltung auftritt, da erneut eine thermische Überlastung der hydrodynamischen Kupplung erfolgt. Dies stellt für den Anlagennutzer einen erheblichen Nachteil dar.

Die Aufgabe der hier vorliegenden Erfindung besteht nun darin, ein Verfahren anzugeben, welches dem Betrieb eines gattungsgemäßen Antriebsstrangs verbessert, und welches insbesondere den genannten Nachteil vermeidet.

Erfindungsgemäß wird diese Aufgabe durch ein Verfahren mit den Merkmalen im kennzeichnenden Teil des Anspruchs 1 gelöst. Vorteilhafte Ausgestaltungen und Weiterbildungen des erfindungsgemäßen Verfahrens ergeben sich aus den restlichen hiervon abhängigen Unteransprüchen.

Bei dem erfindungsgemäßen Verfahren ist nun vorgesehen, dass über eine Temperaturerfassungseinrichtung zumindest im Falle eines Wechsels im Lastzustand und/oder Betriebszustand des Antriebsstrangs die Temperatur erfasst wird. Auf Basis dieser erfassten Temperatur sowie unter Kenntnis des neuen Lastzustands beziehungsweise Betriebszustands des Antriebsstrangs wird dann ein erwarteter Temperaturverlauf errechnet. Diese Berechnung oder Simulation eines erwarteten Temperaturverlaufs kann dann genutzt werden, um eine Warnmeldung oder ein Stoppsignal für die primäre Antriebsmaschine auszugeben, wenn die Temperatur des errechneten Temperaturverlaufs innerhalb der zu erwartenden Dauer des neuen Lastzustands und/oder des neuen Betriebszustands eine vorgegebene Maximaltemperatur überschreitet. Die Temperaturregelung für den Antriebsstrang wird also mit einer gewissen "Intelligenz" ausgestattet. Es wird nicht wie bisher lediglich anhand des Überschreitens einer kritischen Temperatur die Anlage angehalten. Vielmehr wird immer bei einem dynamischen Wechsel beispielsweise im Wechsel von einem angehaltenen Zustand in einen Anfahrvorgang, dem Wechsel von einem Anfahrvorgang in den regulären Betrieb, dem Wechsel vom regulären Betrieb mit der Last 1 auf den regulären Betrieb mit der Last 2 und so weiter eine Vorausberechnung der zu erwartenden Temperaturänderung vorgenommen. In dieser Vorausberechnung der erwartenden Temperaturänderung fließt der neue Zustand, also beispielsweise ein Anfahrzustand bei der zum Abschaltzeitpunkt vorgegebenen Last oder im Falle eines Lastwechsels die erhöhte Last mit ein. Solange der errechnete Temperaturverlauf unterhalb einer vorgegebenen Maximaltemperatur der hydrodynamischen Kupplung bleibt, wird nicht eingegriffen. Nähert er sich einer solchen Temperatur, kann beispielsweise eine Warnmeldung ausgegeben werden, welche den Anlagennutzer dazu auffordert, beispielsweise die Last zu reduzieren. Erst wenn klar ist, dass die Maximaltemperatur des errechneten Temperaturverlaufs die maximal zulässige Temperatur der Turbokupplung sicher überschreiten wird, wird ein Stoppsignal ausgelöst und der Antriebsstrang angehalten.

In einer weiteren sehr günstigen Ausgestaltung des erfindungsgemäßen Verfahrens kann es nun ferner vorgesehen sein, dass außerdem eine Warnmeldung und/oder ein Stoppsignal für die primäre Antriebsmaschine ausgegeben wird, wenn die aktuelle Temperatur größer wird als der ihr entsprechende Wert des errechneten Temperaturverlaufs. Nicht nur die Vorausberechnung und die Reaktion auf die zu erwartende Maximaltemperatur ist bei dem erfindungsgemäßen Verfahren möglich. Vielmehr ist nun möglich auch zu verfolgen, in wieweit das anhand der aktuellen Temperatur messbare Verhalten der hydrodynamischen Kupplung dem vorausberechneten Temperaturverhalten entspricht. Ist dies der Fall, und es liegt immer eingewisser Sicherheitsabstand zwischen den Werten, wird nichts unternommen. Ist dies nicht der Fall, und überschreitet beispielweise der aktuell gemessene Temperaturwert den vorausberechneten Temperaturverlauf, dann liegt typischerweise eine Störung vor, beispielsweise eine Blockade des Antriebsstrangs während eines Anfahrvorgangs. Diese kann dann außerordentlich schnell erfasst und zur Generierung einer Warnmeldung oder insbesondere eines Stoppsignals für die primäre Antriebsmaschine genutzt werden.

In einer weiteren außerordentlich vorteilhaften Ausgestaltung des erfindungsgemäßen Verfahrens kann es nun für den Fall eines Wechsels des Betriebszustands von einem angeschalteten zu einem abgeschalteten Zustand der primären Antriebsmaschine vorgesehen sein, dass basierend auf dem Lastzustand zum Zeitpunkt des Abschaltens zusätzlich ein Anfahrtemperaturverlauf einer Erwärmung im Falle eines Anfahrens des Antriebsstrangs berechnet wird. Aus dieser Simulation des Temperaturverlaufs beim erneuten Anfahren des Antriebsstrangs mit derselben Last, welche zum Zeitpunkt des Anhaltens vorlag, lässt sich dann eine maximale Anfahrtemperaturdifferenz ermitteln, um welche sich der Antriebsstrang im Falle des Anfahrens maximal erwärmt. Nun kann vor einer Freigabe eines erneuten Anfahrens des Antriebsstrangs solange abgewartet werden, bis der errechnete Temperaturverlauf der Abkühlung eine Freigabetemperatur erreicht hat, welche die Maximaltemperatur um zumindest die Anfahrtemperaturdifferenz unterschreitet. Hierdurch wird sichergestellt, dass die hydrodynamische Kupplung in der Lage ist, die komplette beim Anfahren auftretende Erwärmung aufzunehmen, ohne hierdurch die maximal zulässige Betriebstemperatur zu überschreiten und beispielsweise in eine Notabschaltung zu gehen. Der Eingangs geschilderten Problematik kann somit ideal entgegengewirkt werden.

Dabei ist es möglich, dass das Erreichen der Freigabetemperatur durch einen Vergleich der jeweils aktuell erfassten Temperatur und dem entsprechenden Wert des errechneten Temperaturverlaufs erfolgt. Eine Alternative dazu ist ebenfalls denkbar, sie beruht darauf, das Erreichen der Freigabetemperatur durch einen zeitlichen Zähler zu überwachen. Hierfür wird beim Abschalten des Antriebsstrangs ein zeitlicher Zähler gestartet. Anschließend wird abgewartet, bis der zeitliche Zähler einen Zeitwert erreicht hat, welcher ein erneutes Anfahren ermöglicht, bei welchem die hydrodynamische Kupplung also soweit abgekühlt ist, dass die Anfahrtemperaturdifferenz von der hydrodynamischen Kupplung wieder aufgenommen werden kann. Dies kann einerseits durch die bereits beschriebene Simulation so erfolgen, dass der Zeitwert, welchen der zeitliche Zähler erreichen muss, aus dem Temperaturverlauf vorgegeben wird, nämlich als der Zeitwert, bei welchem die Freigabetemperatur erreicht ist. Eine Alternative besteht darin, den Zeitwert unabhängig von einer solchen Berechnung anhand von Kennfeldern beziehungsweise Kennlinien in Abhängigkeit der Temperatur zum Zeitpunkt des Abschaltens sowie der Last der Antriebsmaschine entsprechend vorzugeben.

Ist beispielsweise aus Simulation oder Erfahrung bekannt, dass der Antriebsstrang sich bei einer vorgegebenen Last während des Anfahrens im Bereich der hydrodynamischen Kupplung um einen Temperaturwert von 50 K erwärmt, dann muss ausgehend von der Temperatur, bei welcher die primäre Antriebsmaschine abgeschaltet worden ist, eine Abkühlung erfolgt sein, welche bis zu einem Temperaturwert geführt hat, welcher um mindestens 50 K unterhalb der maximal zulässigen Betriebstemperatur liegt. Erst dann wird das Freigabesignal gesetzt und der Antriebsstrang erneut gestartet.

Gemäß einer sehr vorteilhaften Weiterbildung des erfindungsgemäßen Verfahrens kann es nun außerdem vorgesehen sein, dass bei der Berechnung des Temperaturverlaufs die Umgebungstemperatur der hydrodynamischen Komponente berücksichtigt wird. Dies ist insbesondere für das Abkühlverhalten der hydrodynamischen Kupplung, also einem dynamischen Wechsel von Betrieb in den abgeschalteten Zustand von entscheidender Bedeutung, da sie eine entscheidende Rolle beim Abkühlverhalten und damit beim Ermitteln der Freigabetemperatur beziehungsweise der Zeitdauer bis zur Freigabetemperatur spielt.

In einer weiteren sehr günstigen Ausgestaltung kann es nun außerdem vorgesehen sein, dass die von der Temperaturerfassungseinrichtung erfasste aktuelle Temperatur in Abhängigkeit des auftretenden Temperaturgradienten mit einem Temperaturwert korrigiert wird. Temperaturmessungen sind häufig von einer gewissen zeitlichen Verzögerung befallen. So typischerweise auch die Temperaturmessung im Inneren einer hydrodynamischen Kupplung, da sich die maximale Temperatur nicht zu dem Zeitpunkt einstellt, in dem diese gemessen worden ist, sondern typischerweise bereits davor. In Abhängigkeit des Temperaturgradienten kann der erfasste Temperaturwert deshalb korrigiert und somit die Genauigkeit des Betriebsverfahrens verbessert werden. In einer vorteilhaften Weiterbildung dieser Idee ist es dabei vorgesehen, dass der Korrekturwert proportional zum Temperaturgradienten verläuft, da eine sich schneller ändernde Temperatur einen höheren Korrekturwert erfordert.

In einer weiteren sehr günstigen Ausgestaltung des erfindungsgemäßen Verfahrens kann es nun ferner vorgesehen sein, dass ab einer maximalen Betriebstemperatur die Belastung der hydrodynamischen Kupplung durch eine Verminderung einer Antriebsleistung und/oder einer Last reduziert wird, wobei die maximale Betriebstemperatur kleiner als die Maximaltemperatur ist. In dieser besonders günstigen und vorteilhaften Weiterbildung kann eine maximale Betriebstemperatur vorgegeben werden, ab welcher mit einer Verminderung der Antriebsleistung und/oder der Last einer weiteren Temperaturerhöhung entgegengewirkt wird, um so ein unnötiges Abschalten und damit eine unnötige Stillstandszeit des Antriebsstrangs nach Möglichkeit zu vermeiden.

In einer weiteren sehr günstigen Ausgestaltung dieser Idee kann es nun ferner vorgesehen sein, dass bei einer Warntemperatur, welche größer als die maximale Betriebstemperatur und kleiner als die Maximaltemperatur vorgegeben wird, eine komplette Reduktion der Last erfolgt. Mit einer solchen Reduktion der Last kann einer weiteren Erwärmung sinnvoll entgegengewirkt werden, auch so kann eine Notabschaltung des Systems durch Überschreiten der Maximaltemperatur gegebenenfalls noch vermieden werden, was wiederum für eine verbesserte Verfügbarkeit des Antriebsstrangs sorgt.

In einer weiteren sehr vorteilhaften Ausgestaltung hiervon kann es nun ferner vorgesehen sein, dass die hydrodynamische Kupplung über eine Schmelzsicherungsschraube, welche auf eine Temperatur oberhalb der Maximaltemperatur ausgelegt ist, abgesichert wird. Eine solche Schmelzsicherungsschraube, wie sie beispielsweise aus dem Stand der Technik bekannt ist, kann in jedem Fall dennoch vorhanden sein. Idealerweise ist die Schmelzsicherungsschraube auf einen Temperaturwert oberhalb der Maximaltemperatur ausgelegt, sodass, bei einer sinnvollen Funktionalität des erfindungsgemäßen Verfahrens, diese typischerweise nicht anspricht. Sie wird nur dann ansprechen, wenn das erfindungsgemäße Verfahren versagt, weil beispielsweise einzelne Messwerte nicht erfasst werden können, die Energiezufuhr ausfällt oder dergleichen. In diesem Fall wird bei einer Temperatur oberhalb der Maximaltemperatur durch ein Aufschmelzen der Schmelzsicherungsschraube und ein damit verbundenes Ablassen des Arbeitsmediums aus der hydrodynamischen Kupplung eine Trennung von Antriebsmaschine und Arbeitsmaschine in dem Antriebsstrang zwangsweise erreicht.

Wie bereits erwähnt kann die Messung der Temperatur in der hydrodynamischen Kupplung über eine Messung in der hydrodynamischen Kupplung und eine berührungslose Übertragung des Messwerts in eine stationäre Auswerteeinheit erfolgen. Dieser Aufbau analog zum eingangs genannten deutschen Patent ist besonders einfach und effizient, da er die Temperaturwerte in der hydrodynamischen Kupplung beziehungsweise dem in der hydrodynamischen Kupplung befindlichen Arbeitsmedium sehr direkt und außerordentlich schnell erfassen kann. Bei der hydrodynamischen Kupplung kann es sich im Prinzip um jede Art von hydrodynamischer Kupplung, also beispielsweise einen hydrodynamischen Wandler oder insbesondere auch eine hydrodynamische Kupplung beziehungsweise Turbokupplung handeln.

Vorteilhafte Ausgestaltungen eines Ausführungsbeispiels des erfindungsgemäßen Verfahrens werden anhand des Ausführungsbeispiels deutlich, welches nachfolgend unter Bezugnahme auf die Figuren näher beschrieben ist.

Dabei zeigen:

Figur 1    einen prinzipmäßigen Antriebsstrang mit einer hydrodynamischen Kupplung, insbesondere einer Turbokupplung, an welchem das erfindungsgemäße Verfahren realisiert werden kann;

Figur 2    ein vereinfachter Ablaufplan für das erfindungsgemäße Verfahren;

Figur 3    der Ablaufplan gemäß Fig. 2 in einer möglichen detaillierten Ausgestaltung;

Figur 4    ein Diagramm, welches die Simulation eines Hochlaufens des Antriebsstrangs zeigt; und

Figur 5    ein Diagramm, welches die Simulation eines Abkühlverhaltens des Antriebsstrangs zeigt.

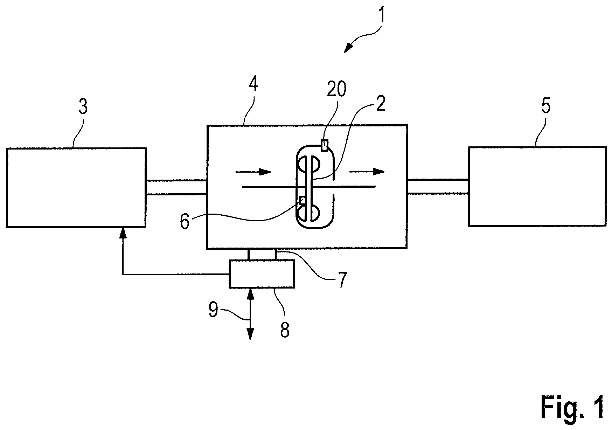

In der Darstellung der Figur 1 ist sehr stark schematisiert und rein beispielhaft ein Antriebsstrang 1 zu erkennen. Der Antriebsstrang 1 ist so aufgebaut, dass er eine hydrodynamische Kupplung 2, insbesondere eine Turbokupplung (VTK), aufweist. Über eine primäre Antriebsmaschine 3 wird über ein angedeutetes Getriebe 4, wobei die Turbokupplung 2 ein Teil dieses Getriebes 4 oder auch ein eigenständiges Bauteil zusätzlich zu einem derartigen Getriebe oder anstelle eines derartigen Getriebes 4 sein kann, eine Arbeitsmaschine 5 angetrieben wird. Die Arbeitsmaschine 5 kann beispielsweise eine Arbeitsmaschine 5 im stationären Bereich, insbesondere ein Gurtförderer, ein Schredder oder dergleichen sein. Die Turbokupplung 2 weist eine im Bereich der Turbokupplung 2 angedeutete berührungslose thermische Messeinrichtung 6 auf. Die berührungslose thermische Messeinrichtung (BTM) 6 korrespondiert mit einer Empfangseinrichtung 7, welche in korrespondierendem Kontakt zu einem Auswertegerät (AWG) 8 steht oder Teil einer solchen ist. Über das Auswertegerät 8 wird ein von der berührungslosen thermischen Messeinrichtung 6 gesendetes Temperatursignal entsprechend ausgewertet und es kann insbesondere eine Ansteuerung der primären Antriebsmaschine 3, insbesondere eines Elektromotors, erfolgen. Dies ist durch die Pfeile zwischen dem Auswertegerät 8 und der primären Antriebsmaschine 3 entsprechend angedeutet. Gleichzeitig kann das Auswertegerät 8 Signale von außerhalb empfangen, beispielsweise ein Startsignal oder dergleichen. Dies ist durch den mit 9 bezeichneten Doppelpfeil entsprechend angedeutet. Durch die andere Richtung im Doppelpfeil 9 soll angedeutet werden, dass Signale des Auswertegeräts 8 nach außerhalb gegeben werden können, beispielsweise Warnsignale hinsichtlich eines Überschreitens einer vorgegebenen Temperatur oder dergleichen.

In der Prinzipdarstellung der Figur 1 ist außerdem eine Schmelzsicherungsschraube (SSS) 20 im Bereich der Turbokupplung 2 zu erkennen. Diese ist aus dem allgemeinen Stand der Technik an sich bekannt und stellt ein letztes Sicherungsmittel dar, welches ein Überhitzen der Turbokupplung 2 verhindert, indem das Arbeitsmedium ein Schmelzlot aufschmilzt und entsprechend in die Umgebung abgegeben wird, wodurch die Kraftübertragung durch den Vöttinger-Kreislauf in der Turbokupplung 2 unterbrochen wird.

Das erfindungsgemäße Betriebsverfahren für den Antriebsstrang 1 wird nun nachfolgend anhand eines ausgewählten Beispiels einer dynamischen Änderung eines Betriebszustandes beziehungsweise Lastzustandes aufgezeigt. In diesem Fall ändert sich dabei nur der Betriebszustand, und zwar insofern, als von einem abgeschalteten Betriebszustand in einen Betriebszustand des Anfahrens gewechselt wird. Jede andere dynamische Änderung verhält sich jedoch analog, sodass für den Fachmann dieses eine Beispiel zum Verständnis des erfindungsgemäßen Verfahrens ausreichend ist.

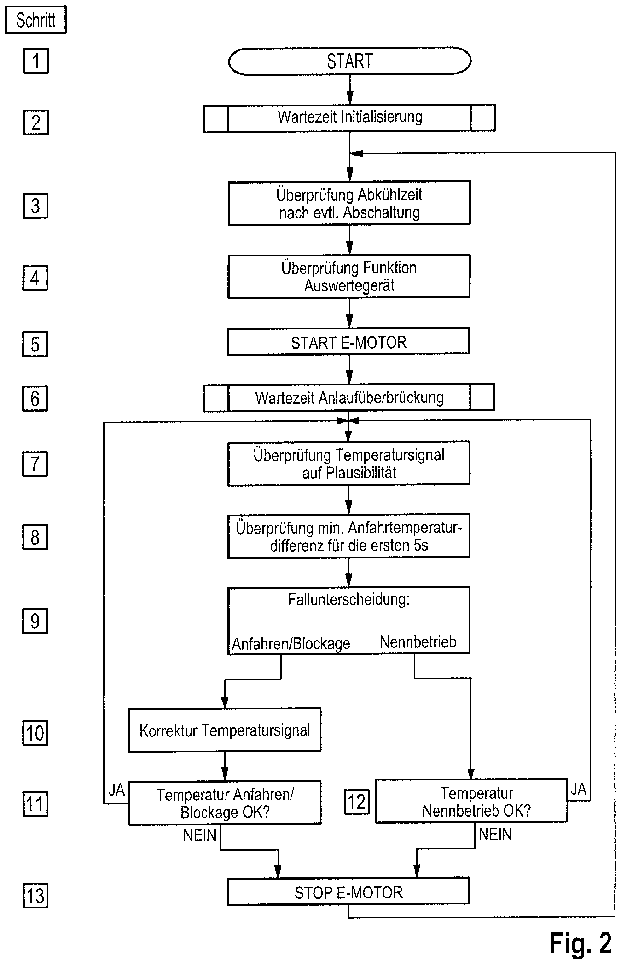

In der Darstellung der Figur 2 ist ein vereinfachter Ablauf für den Antriebsstrang 1, insbesondere für die Turbokupplung 2 des Antriebsstrangs 1, dargestellt. Ausgehend von einem von außen vorgegebenen Startsignal erfolgt eine entsprechende Verarbeitung beispielsweise im Bereich des Auswertegeräts 8, welche die Logikschritte implementiert aufweist. Nach einer kurzen Wartezeit zur Initialisierung wird bei dem Verfahrensablauf zuerst überprüft, ob eine entsprechende Abkühlzeit nach einer eventuellen Abschaltung aufgrund eines Überschreitens einer vorgegebenen Maximaltemperatur eingehalten worden ist, bevor im Verfahrensablauf weitergegangen wird. Nach einer Überprüfung der Funktion des Auswertegeräts 8 wird dann der Elektromotor 3 als primäres Antriebsaggregat 3 gestartet. Anschließend erfolgt eine kurze Wartezeit für die Anlaufüberbrückung, bevor mit einer Überprüfung des Temperatursignals der Messeinrichtung 6 auf Plausibilität fortgefahren wird. Anschließend erfolgt eine Überprüfung der minimalen erforderlichen Anfahrtemperaturdifferenz für die ersten fünf Sekunden und danach eine Fallunterscheidung, ob es sich um einen Nennbetrieb oder ein Anfahren beziehungsweise eine Blockade handelt. Im Falle einer Anfahr- beziehungsweise einer Blockade erfolgt eine Korrektur des Temperatursignals, was im Nennbetrieb so nicht notwendig ist. Anschließend wird die Temperatur mit einer vorgegebenen Maximaltemperatur verglichen und der Verfahrensablauf startet von Neuem mit einer Überprüfung des Temperatursignals auf Plausibilität, wenn der Temperaturwert unterhalb der vorgegebenen Maximaltemperatur liegt. Falls dies nicht der Fall ist, erfolgt ein Abschalten des Elektromotors, also eine Notabschaltung des Systems.

Anschließend wird vor einem eventuellen manuellen und/oder automatisch durchgeführten Wiederstart des Antriebsstrangs 1 beziehungsweise des Elektromotors 3 wieder mit der Überprüfung der Abkühlzeit nach der eventuellen Abschaltung durch Überschreiten der vorgegebenen Maximaltemperatur gestartet. Durch diese Überprüfung der Abkühlzeit und gegebenenfalls die Verzögerung des Wiederstarts wird erreicht, dass aufgrund der unvermeidlichen Anfahrtemperaturdifferenz sofort wieder eine Notabschaltung erfolgt, da der aktuelle Temperaturwert plus die erforderliche Anfahrtemperaturdifferenz die Maximaltemperatur wiederum überschreitet.

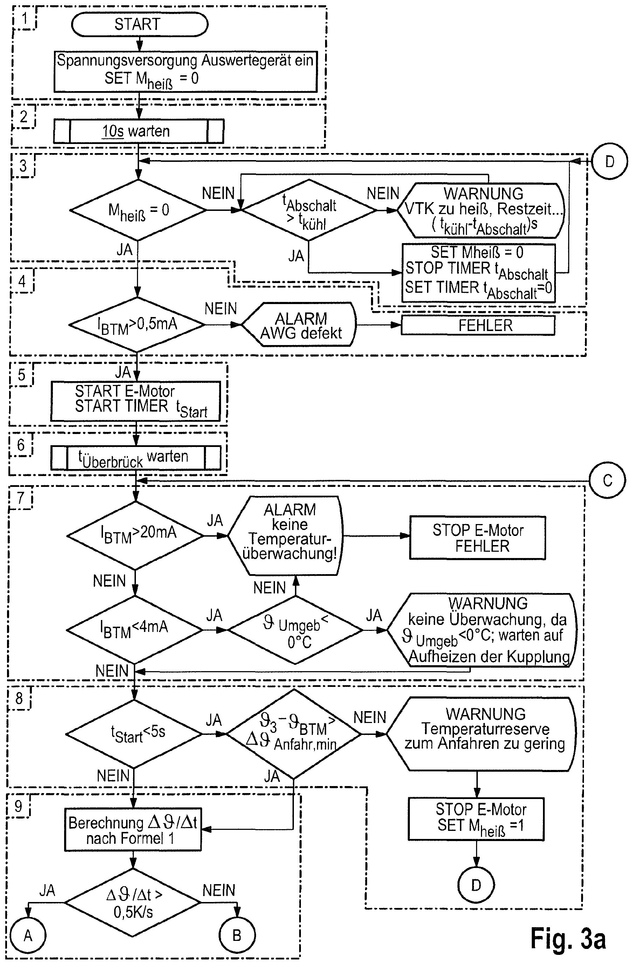

Anhand der Figuren 3a bis 3c wird der Ablauf nun im Detail beschrieben und aufgezeigt, wobei zur Vereinfachung der Darstellung folgende Abkürzungen und Formeln vordefiniert werden:

Temperaturen:

- $I_{BTM}$ / $\vartheta_{BTM}$: analoger BTM-Ausgang (4mA ... 20mA = 0° C ... 200° C)

- $\vartheta_{Umgeb}$: Umgebungstemperatur der Kupplung

- $\vartheta_{VTK}$: "wahre" (korrigierte) Kupplungstemperatur, Anzeige auch an den Bediener

- $\Delta\vartheta/\Delta t$: Temperaturgradient (-anstieg), berechnet nach Formel 1 (siehe unten)

- $\Delta\vartheta_{Anfahr,min}$: benötigte Anfahrtemperaturdifferenz, um die Arbeitsmaschine bei der jeweiligen aktuellen Belastung anfahren zu können

- $\vartheta_1$: max. Betriebstemperatur ($\vartheta_{B\,max}$), bei der die Belastung reduziert werden sollte

- $\vartheta_2$: Temperatur, bei der Belastung weggenommen werden muss

- $\vartheta_3$: max. Spitzentemperatur ($\vartheta_{SP\,max}$), die zur Abschaltung der Anlage führt

Zeiten / Timer (zeitliche Zähler)

- $t_{Abschalt}$: Timer, der bei Überhitzung (Überschreitung $\vartheta_3$) gestartet wird
- $t_{kühl}$: erforderliche Kühlzeit nach Überhitzung der Kupplung 2 um diese wieder anfahren zu können, wird auftragsbezogen und in Abhängigkeit von der aktuellen Belastung festgelegt
- $t_{Start}$: Timer, der beim Start des Elektromotors gestartet wird
- $t_{Überbrück}$: Anlaufüberbrückung (beispielsweise bis Drehzahl 300 1/min überschritten wird). Falls bei der Logikausgabe "START E-MOTOR" der Elektromotor nicht sofort gestartet wird, muss diese Zeit aufaddiert werden.
- $t_{Anlauf}$: max. Anlaufzeit der Anlage, berechnet aus Simulation und 10s Sicherheitszuschlag
- $t_{Block}$: Timer, der bei Erkennung Anfahren/Blockage gestartet wird
- $t_{Rest}$: Restzeit bei Blockage bis zum Abschalten der Anlage
- $t_{n\,\vartheta1}$: Timer, der bei Überschreitung von $\vartheta_1$ gestartet wird
- $t_{n\vartheta2}$: Timer, der bei Überschreitung von $\vartheta_2$ gestartet wird
- $t_{Überbrück}$: Timer, der erstmalig bei Übergang von Anfahren/Blockage zu Nennbetrieb und gleichzeitiger Abkühlung gestartet wird

Merker:

- $M_{heiß}$: Merker, wenn Anlage wegen Überhitzung abgeschaltet wurde (= 1)

Formeln:

- $$\text{Formel 1:}\quad \Delta\vartheta / \Delta t = \frac{\vartheta_{BTM,t2} - \vartheta_{BTM,t1}}{t_2 - t_1} \quad;$$

$$t_2 = t_1 + 2s$$

- $$\text{Formel 2:}\quad \vartheta_{VTK} = (3\cdot\Delta\vartheta/\Delta t) + 10K + \vartheta_{BTM}$$

- $$\text{Formel 3:}\quad \vartheta_{VTK} = (1{,}5\cdot\Delta\vartheta/\Delta t) + 5K + \vartheta_{BTM}$$

- $$\text{Formel 4:}\quad t_{Rest} = \frac{\vartheta_3 - \vartheta_{VTK}}{\Delta\vartheta / \Delta t}$$

wobei: $t_1$: aktueller Zeitpunkt
$\vartheta_{BTM,t1}$: Temperatur zum Zeitpunkt $t_1$
$t_2$: 2s vor aktuellem Zeitpunkt
$\vartheta_{BTM,t2}$: Temperatur zum Zeitpunkt $t_2$

Während des Programmablaufs werden die nachfolgenden Werte ständig in das Auswertegerät 8 eingelesen:

- $I_{BTM}$ / $\vartheta_{BTM}$: analoger BTM-Ausgang am Ausgabegerät (4mA ... 20mA = 0° C ... 200° C)
- $\vartheta_{Umgeb}$: Umgebungstemperatur der Kupplung 2. Wenn im konkreten Anwendungsfall Temperaturen unter 0° C ausgeschlossen werden können, kann dieser Eingang programmintern ständig > 0° C gesetzt werden.

- $P_{Last}$: prozentuale aktuelle Belastung der Anlage. Dieser Wert kann anlagenseitig z. B. über den Motorstrom berechnet werden oder vom Bedienpersonal als Wählschalter (120%, 100%, 90%, 80%, 70%, 60%) in die Steuerung eingegeben werden. Diese Eingabe wird benötigt, um $t_{Kühl}$ und $\Delta\vartheta_{Anfahr,min}$ den aktuellen Beladungsbedingungen anzupassen (siehe Tabelle unten). Wird diese Abstufung nicht gewünscht, kann der feste Wert $P_{Last}$ = 100% angenommen werden.

Ferner sind weitere Werte typischerweise anhand der Baugröße des Antriebsstrangs 1 beziehungsweise der in der Turbokupplung 2 und der mit ihr zu übertragenden Leistungen entsprechend vorgegeben und im Bereich des Auswertegeräts 8 gespeichert.

- $t_{Überbrück}$: Anlaufüberdrückung (beispielsweise bis Drehzahl von 300 1/min der Außenteile)
- $t_{Anlauf}$: max. Anlaufzeit der Anlage, berechnet aus TurboSim und 10s Sicherheitszuschlag
- $\vartheta_1$: max. Betriebstemperatur $\vartheta_{B\,max}$), bei der die Belastung reduziert werden sollte

  $\vartheta_1$ = 95° C mit NBR-Dichtungen (Perbunan)

  $\vartheta_1$ = 120° C mit FPM-Dichtungnen (Viton) für VTK $\leq$ 750

  $\vartheta_1$ = 105° C mit FPM-Dichtungen (Viton) für > VTK 750

- $\vartheta_2$: Temperatur, bei der Belastung komplett weggenommen werden muss, hierbei sollte eine sinnvolle Abstufung zwischen $\vartheta_1$ und $\vartheta_2$ gewählt werden
- $\vartheta_3$: max. Spitzentemperatur ($\vartheta_{SP\,max}$), die zur Abschaltung der Anlage führt

$$\vartheta_3 = \vartheta_{SSS} - 15° C$$

Die Kommunikation des Auswertegeräts 8 mit dem Elektromotor 3 als primärer Antriebsmaschine ist dann typischerweise sehr rudimentär, weil lediglich eine Startfreigabe oder eine sofortige Abschaltung des Elektromotors 3 an diesen kommuniziert werden muss.

Die Figuren 3a bis 3c erläutern den im Kern in Figur 2 vereinfacht dargestellten Ablauf nun auf Basis der beschriebenen Abkürzungen und Werte sehr detailliert an einer beispielhaften möglichen Ausführung. Nachfolgend soll lediglich auf einige Punkte zum besseren Verständnis der Figuren näher eingegangen werden.

In der Figur 3a sind Schritte 1 bis 9 nochmals dargestellt. Insgesamt startet der Betrieb des Antriebsstrangs 1 mit einem Startbefehl, worauf nach dem Einschalten der Spannungsversorgung im Schritt 1 der Merker $M_{heiß}$ auf Null gesetzt wird. Im Schritt 2 wird eine Zeitspanne von 10 Sekunden abgewartet, bevor im Schritt 3 geprüft wird, ob der Merker $M_{heiß}$ auf Null gesetzt ist, also der Startvorgang erst kurz vorher eingeleitet worden ist oder nicht. Ist er dies nicht, wird der Schritt 3 typischerweise über den mit D bezeichneten Bereich in der später noch näher erläuterten Art und Weise angestoßen und es lag zuvor eine temperaturbedingte Abschaltung des Elektromotors 3 vor. In diesem Fall wird der Abschalttimer mit dem Kühltimer verglichen, wobei der Abschalttimer mit der temperaturbedingten Abschaltung gestartet wird, und der Kühltimer in der später noch näher beschriebenen Art und Weise als Wert vorgegeben wird.

Entweder es wird eine Warnung ausgegeben, dass die Turbokupplung 2 zu heiß ist und idealerweise kann eine Restzeit für die noch erforderliche Abkühlung ausgegeben werden. Ist der Wert des Abschalttimers bereits größer als der vorgegebene Zeitwert $t_{Kühl}$, dann wird der Merker $M_{heiß}$ auf Null gesetzt, der Timer $t_{Abschalt}$ gestoppt und ebenfalls auf Null gesetzt. Schritt 3 wird dann neu gestartet und durchläuft aufgrund des auf Null gesetzten Merkers $M_{heiß}$ die erste Abfrage unmittelbar. Im Schritt 4 wird die Funktion des Auswertegeräts 8 überprüft, indem ein Basisstromwert der berührungslosen thermischen Messeinrichtung 6 abgefragt wird. Liegt dieser oberhalb eines vorgegebenen Schwellenwerts, ist alles in Ordnung, falls nicht, wird ein entsprechender Alarm ausgegeben und eine Fehlermeldung generiert.

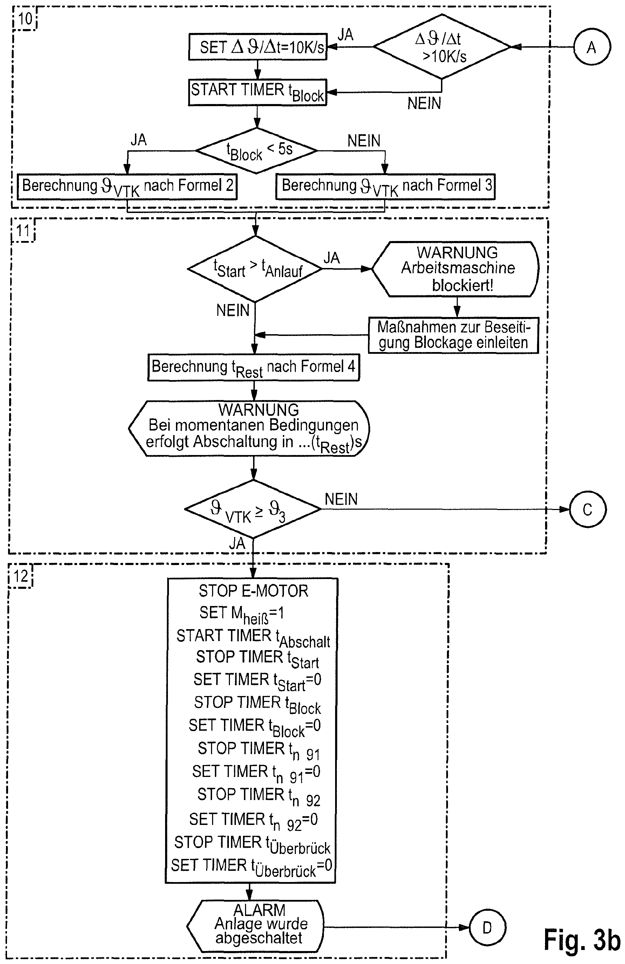

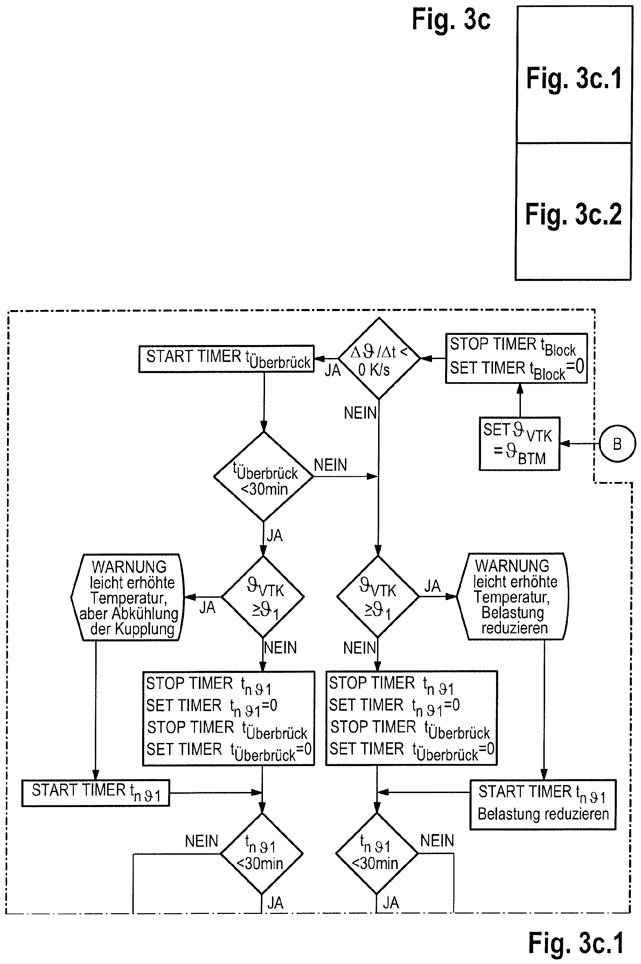

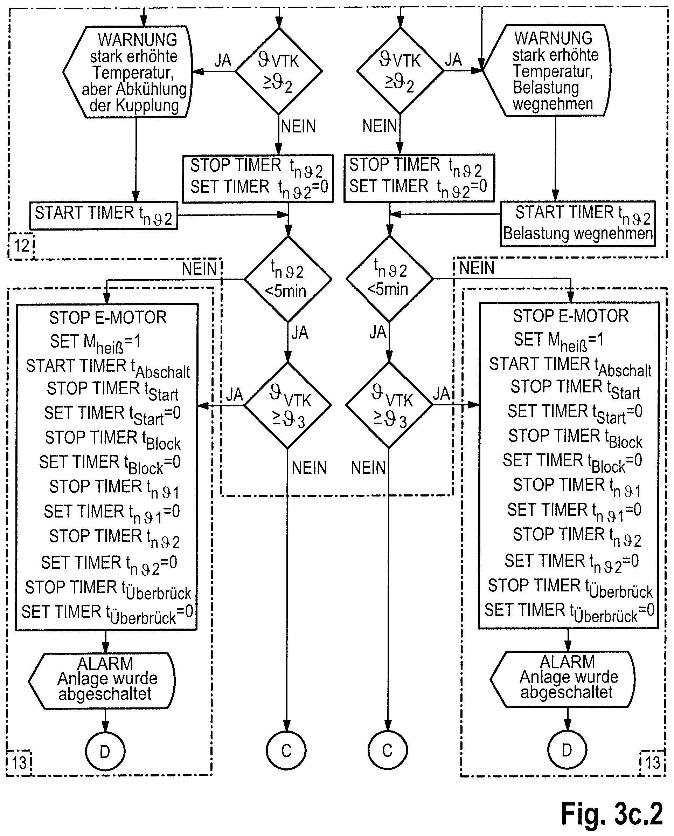

Anschließend wird der Elektromotor 3 gestartet und für eine gewisse Überbrückungszeit wird abgewartet. Im Schritt 7 wird dann die Plausibilität des Temperaturwerts von der Messeinrichtung 6 überprüft, indem abgefragt wird, ob der über die Messeinrichtung 6 gelieferte Strom in einem bestimmten Bereich liegt. Ist dies der Fall, ist alles in Ordnung, ist dies nicht der Fall, wird eine entsprechende Warnmeldung ausgegeben und der Elektromotor 3 wird wiederum gestoppt. Ist die Umgebungstemperatur zu niedrig, wird zum Aufheizen der Kupplung beziehungsweise Turbokupplung abgewartet. Im Schritt 8 erfolgt dann eine Überprüfung der minimalen Anfahrtemperaturdifferenz für die ersten fünf Sekunden, wobei im Falle einer zu geringen Temperaturreserve zum Anfahren der Elektromotor 3 wiederum gestoppt und der Merker $M_{heiß}$ auf 1 gesetzt wird. Dann wird zu Schritt 3 zurückgesprungen. Ansonsten wird gestartet und über die Formel 1 erfolgt eine Berechnung des Temperaturgradienten. Im Schritt 9 wird dann ausgewertet, ob der Temperaturgradient entsprechend groß oder klein ist, sodass die in Schritt 9 mit A und B unterschiedenen Fälle ausgewählt werden können. Bei diesen Fällen handelt es sich um den Nennbetrieb (B) beziehungsweise den Betrieb während des Anfahrens oder einer Blockade (A), wie es in der Darstellung der Figur 2 in der Übersicht zu erkennen ist. In Figur 3b ist der Ablauf nach a mit den Schritten 10, 11 und gegebenenfalls 13 näher spezifiziert. Im Schritt 10 wird erneut geprüft, ob der Temperaturgradient einen zweiten Grenzwert von 10 K/Sekunde überschreitet. Ist dies der Fall, wird er auf 10 K/Sekunde festgesetzt. Ist dies nicht der Fall, wird unmittelbar der Timer $t_{Block}$ gestartet, welcher ansonsten nach der Festsetzung gestartet wird. Über eine Zeitabfrage, ob der Timer unterhalb oder oberhalb von 5 Sekunden liegt, wird dann eine Berechnung der Temperatur der Turbokupplung entweder nach Formel 2 oder Formel 3 durchgeführt. Im Schritt 11 wird dann für den Fall einer Blockade eine entsprechende Warnung ausgegeben und gegebenenfalls Maßnahmen zur Beseitigung der Blockade eingeleitet. Anschließend wird über Formel 4 eine Restzeit berechnet und eine Warnung ausgegeben, dass bei den momentanen Bedingungen die Abschaltung in der durch den Restzeitwert berechneten Größe erfolgt. Anschließend erfolgt die Überprüfung, ob die Temperatur der Kupplung tatsächlich den maximalen Temperaturgrenzwert $\vartheta_3$ überschritten hat. Ist dies nicht der Fall, wird entsprechend der Punkt c zwischen den Punkten 6 und 7 zurückgesprungen. Ist dies der Fall, wird im Schritt 13 der Elektromotor 3 abgeschaltet und die entsprechenden Timer gemäß der Darstellung in Figur 3b gesetzt. Nach Ausgabe eines Alarms wird dann in den Schritt 3 zurückgesprungen, sodass nach ausreichender Abkühlung ein Neustart des Elektromotors 3 erfolgen kann. In der Darstellung der Figur 3c ist die Überwachung für den Nennbetrieb beschrieben. Hier erfolgt im Wesentlichen eine Temperaturüberwachung, welche zwischen leicht erhöhter Temperatur mit der Notwendigkeit, die Belastung zu reduzieren, und einer stark erhöhten Temperatur, mit der Notwendigkeit die Belastung gänzlich wegzunehmen, unterscheidet. Nur wenn keine entsprechende Maßnahme eintritt, wird jeweils der Schritt 13 zum Stoppen des Elektromotors 3 analog zur Darstellung in Figur 3c aufgerufen, ansonsten wird der Ablauf zwischen den Schritten 6 und 7 neu gestartet und fortwährend durchlaufen.

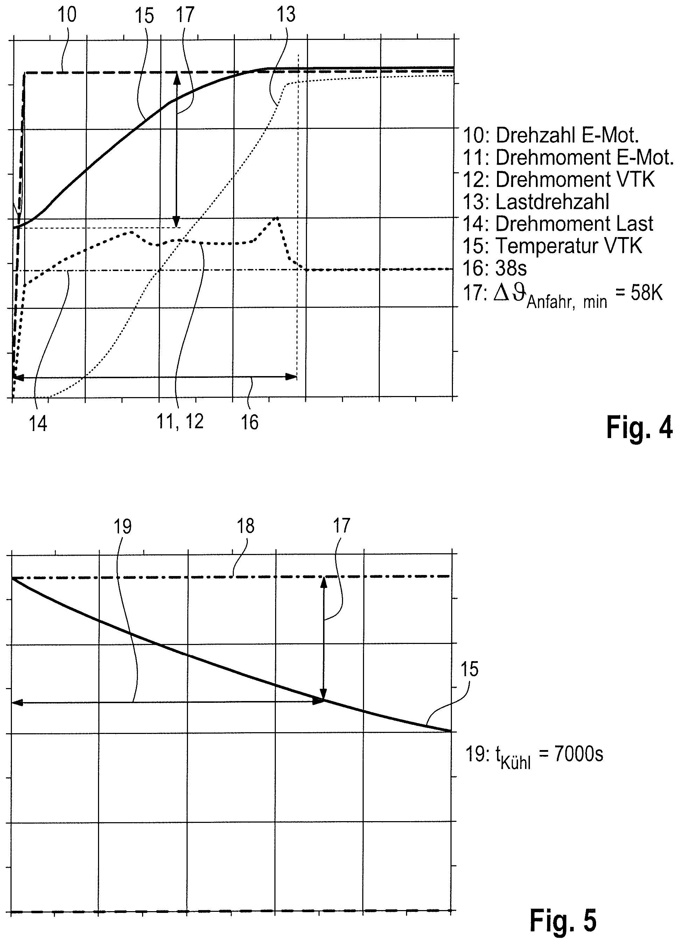

Um nun den vorgegebenen Zeitwert $t_{Kühl}$ zu ermitteln, wird insbesondere in Abhängigkeit der Last beispielsweise die nachfolgend beschriebene Simulation durchgeführt. Dies kann für verschiedene Lastzustände erfolgen und führt dabei jeweils zu verschiedenen Ergebnissen. Beispielhaft ist in den Figuren 4 und 5 der Vorgang lediglich für die Last von 100 % beispielhaft dargestellt. In dem Diagramm der Figur 4 sind mehrere einzelne Kurven zu erkennen. So ist beispielsweise die Motordrehzahl 10 und das Motordrehmoment 11 sowie das Sekundärdrehmoment 12 der Turbokupplung 2 dargestellt. In der Darstellung der Figur 4 ist außerdem eine Kurve 13 der Lastdrehzahl sowie eine Kurve 14 mit dem Lastdrehmoment zu erkennen. Entscheidend für die hier dargestellte Betrachtung ist insbesondere der mit 15 bezeichnete Temperaturverlauf in der Turbokupplung 2. Zu erkennen ist, dass während des Anfahrvorgangs vom linken Ende des Diagramms an die Drehzahl schnell ansteigt und das Drehmoment, welches auf die Turbokupplung 2 übertragen wird, ebenfalls ansteigt, bis diese sich nach abgeschlossenem Fahrvorgang im Bereich des Lastmoments 14 einpendelt. Dieser Anfahrvorgang beziehungsweise Anlauf ist in der Darstellung der Figur 4 mit dem mit 16 bezeichneten Pfeil angedeutet und beträgt rein beispielhaft 38 Sekunden. Gleichzeitig kann beobachtet werden, dass die Temperatur der Turbokupplung 2 von einem Startwert der Temperatur ganz links im Diagramm bis zu einem konstanten Temperaturwert während des regulären Betriebs ansteigt. Dieser Temperaturanstieg ist über den mit 17 bezeichneten Pfeil dargestellt und bezeichnet die erforderliche Anfahrtemperaturdifferenz $\Delta\vartheta_{Anfahr,min}$, welche in dem hier dargestellten Ausführungsbeispiel 58 K beträgt. In die in Figur 4 dargestellte Simulation fließen dabei weitere Größen wie beispielsweise die Umgebungstemperatur der Turbokupplung und die Starttemperatur der Turbokupplung beim Abschalten aufgrund des Erreichens der Maximaltemperatur $\vartheta_3$ mit ein. In der Darstellung der Figur 5 ist in einer weiteren Simulation nun das Abkühlverhalten der Turbokupplung 2 zu erkennen. Die Kurve der Temperatur der Turbokupplung 2 ist wiederum mit dem Bezugszeichen 15 bezeichnet, die zulässige Betriebstemperatur der Turbokupplung 2 bei der vorgegebenen Last, hier 100 %, mit dem Bezugszeichen 18. Die Temperaturkurve 15 zeigt die simulierte Abkühlung der Turbokupplung 2 bei den beschriebenen Bedingungen. Über den mit 17 bezeichneten Pfeil ist wiederum die Anfahrtemperaturdifferenz $\Delta\vartheta_{Anfahr,min}$ von 58K angezeigt, was bedeutet, dass die Abkühlung mindestens um diese 58 K gegenüber der zulässigen Temperatur 18 der Turbokupplung 2 erfolgt sein muss, um beim Anfahren keine erneute Überhitzung und Abschaltung beziehungsweise Lastreduzierung an der Turbokupplung 2 zu provozieren. Wird dieser Wert in das Diagramm eingetragen, dann ergibt sich für den entsprechenden Punkt auf den Temperaturverlauf 15 ein entsprechender Wert auf der Zeitachse, welche über den Pfeil 19 ebenfalls eingezeichnet ist. Dies ist der vorgegebene Zeitwert $t_{Kühl}$, welcher in dem hier dargestellten Ausführungsbeispiel 7000 Sekunden beträgt. Bei dem erfindungsgemäßen Verfahren wird also im Schritt 3 des Ablaufs der Wert $t_{Kühl}$ mit 7000 Sekunden vorgegeben. Dies bedeutet, dass der Timer $t_{Abschalt}$ bereits seit 7000 Sekunden gelaufen sein muss, bevor ein erneuter Start des Elektromotors 3 gemäß dem vorgegebenen Logikschema möglich wird. Durch diese Vorgabe wird die maximale Verfügbarkeit der Anlage ermöglicht und es können Anfahrversuche, welche unmittelbar wieder zu einer Abschaltung und damit letztlich zu einer Verlängerung der Gesamtdauer, in welcher die Anlage nicht oder nicht in vollem Umfang zur Verfügung steht, führt, verhindert werden.

**Patentansprüche**

1. Verfahren zum Betreiben eines Antriebsstrangs (1), mit

    1.1 einer primären Antriebsmaschine (3);
    1.2 einer hiervon angetriebenen Arbeitsmaschine (5);
    1.3 einer hydrodynamischen Kupplung (2) zwischen der Antriebsmaschine (3) und der Arbeitsmaschine (5);
    1.4 einer Temperaturerfassungseinrichtung zum Erfassen der Temperatur in der hydrodynamischen Kupplung (2), wobei
    1.5 im zumindest Falle eines Wechsels im Lastzustand und/oder Betriebszustand des Antriebsstrangs (1) die Temperatur der hydrodynamischen Kupplung (2) zum Zeitpunkt des Wechsels erfasst wird, wobei
    1.6 ausgehend von der erfassten Temperatur sowie dem neuen Lastzustand und/oder dem neuen Betriebszustand des Antriebsstrangs (1) ein zu erwartender Temperaturverlauf errechnet wird,
    1.7 eine Warnmeldung und/oder ein Stoppsignal für die primäre Antriebsmaschine (3) ausgegeben wird, wenn die Temperatur des errechneten Temperaturverlaufs innerhalb der zu erwartenden Dauer des neuen Lastzustands und/oder des neuen Betriebszustands eine vorgegebene Maximaltemperatur ($\vartheta_3$) überschreitet und **dadurch gekennzeichnet**,
    1.8 dass im Falle eines Wechsels des Betriebszustandes von einem angeschalteten zu einem abgeschalteten Zustand der primären Antriebsmaschine (3) basierend auf dem Lastzustand zum Zeitpunkt des Abschaltens zusätzlich ein Anfahrtemperaturverlauf einer Erwärmung im Falle eines Anfahrens des Antriebsstrangs berechnet wird, aus welchem eine maximal auftretende Anfahrtemperaturdifferenz ermittelt wird, wobei vor der Freigabe eines erneuten Anfahrens des Antriebsstrangs (1) abgewartet wird, bis der errechnete Temperaturverlauf eine Freigabetemperatur erreicht hat, welche die Maximaltemperatur um zumindest die Anfahrtemperaturdifferenz unterschreitet.

2. Verfahren nach Anspruch 1, **dadurch gekennzeichnet, dass** außerdem eine Warnmeldung und/oder ein Stoppsignal für die primäre Antriebsmaschine (3) ausgegeben wird, wenn die aktuelle Temperatur größer wird, als der ihr entsprechende Wert des errechneten Temperaturverlaufs.

3. Verfahren nach Anspruch 1, **dadurch gekennzeichnet, dass** das Erreichen der Freigabetemperatur durch einen Vergleich der jeweils aktuell erfassten Temperatur mit dem entsprechenden Wert des errechneten Temperaturverlauf erfolgt.

4. Verfahren nach Anspruch 1, **dadurch gekennzeichnet, dass** das Erreichen der Freigabetemperatur durch einen zeitlichen Zähler überwacht wird, wobei beim Abschalten der zeitlicher Zähler ($t_{Abschalt}$) gestartet wird, wobei beim erneuten Anfahren der primären Antriebsmaschine (3) zuerst überprüft wird, ob der zeitliche Zähler ($t_{Abschalt}$) einen Zeitwert ($t_{Kühl}$) erreicht hat, bei welchem der errechnete Temperaturverlauf die Freigabetemperatur erreicht.

5. Verfahren nach Anspruch 1, **dadurch gekennzeichnet, dass** das Erreichen der Freigabetemperatur durch einen zeitlichen Zähler überwacht wird, wobei beim Abschalten der zeitlicher Zähler ($t_{Abschalt}$) gestartet wird, wobei beim erneuten Anfahren der primären Antriebsmaschine (3) zuerst überprüft wird, ob der zeitliche Zähler ($t_{Abschalt}$) einen Zeitwert ($t_{Kühl}$) erreicht hat, welcher in Abhängigkeit einer Umgebungstemperatur, einer Temperatur zum Zeitpunkt des Abschaltens und/oder einer Last ($P_{Last}$) der Arbeitsmaschine (5) in Kennlinien beziehungsweise Kennfeldern aufgrund von vorherigen Messungen und/oder Simulationswerten nachgeschlagen wird.

6. Verfahren nach einem der Ansprüche 1 bis 5, **dadurch gekennzeichnet, dass** bei der Berechnung des Temperaturverlaufs die Umgebungstemperatur der hydrodynamischen Kupplung (2) berücksichtigt wird.

7. Verfahren nach einem der Ansprüche 1 bis 6, **dadurch gekennzeichnet, dass** der von der Temperaturerfassungseinrichtung erfasste aktuelle Temperaturwert in Abhängigkeit des auftretenden Temperaturgradienten mit einem Korrekturwert korrigiert wird.

8. Verfahren nach Anspruch 7, **dadurch gekennzeichnet, dass** der Korrekturwert proportional zum Temperaturgradienten gewählt wird.

9. Verfahren nach einem der Ansprüche 1 bis 8, **dadurch gekennzeichnet, dass** ab einer maximalen Betriebstemperatur ($\vartheta_1$) die Belastung der hydrodynamischen Kupplung (2) durch eine Verminderung einer Antriebsleistung und/oder einer Last reduziert wird, wobei die maximale Betriebstemperatur ($\vartheta_1$) kleiner als die Maximaltemperatur

($\vartheta_3$) ist.

10. Verfahren nach Anspruch 9, **dadurch gekennzeichnet, dass** bei einer Warntemperatur ($\vartheta_2$), welche größer als die maximale Betriebstemperatur ($\vartheta_1$) und kleiner als die Maximaltemperatur ($\vartheta_3$) vorgegeben wird, eine komplette Reduktion der Last erfolgt.

11. Verfahren nach einem der Ansprüche 1 bis 10, **dadurch gekennzeichnet, dass** die hydrodynamische Kupplung (2) über eine Schmelzsicherungsschraube (20), welche auf eine Temperatur oberhalb der Maximaltemperatur ($\vartheta_3$) ausgelegt ist, abgesichert wird.

12. Verfahren nach einem der Ansprüche 1 bis 11, **dadurch gekennzeichnet, dass** die Messung der Temperatur ($\vartheta_{VTK}$) der hydrodynamischen Kupplung (2) über eine Messung in der hydrodynamischen Kupplung (2) und eine berührungslose Übertragung des Messwerts in eine stationäre Auswerteeinheit (8) erfolgt.

**Claims**

1. Method for operating a drive train (1), with

    1.1 a primary drive machine (3);
    1.2 a work machine (5) which is driven by the former;
    1.3 a hydrodynamic coupling (2) between the drive machine (3) and the work machine (5);
    1.4 a temperature detection device for detecting the temperature in the hydrodynamic coupling (2),
    1.5 in at least the case of a change in the load state and/or operating state of the drive train (1), the temperature of the hydrodynamic coupling (2) being detected at the time of the change,
    1.6 a temperature profile to be expected being calculated in a manner which proceeds from the detected temperature and the new load state and/or the new operating state of the drive train (1),
    1.7 a warning signal and/or a stop signal for the primary drive machine (3) being output if the temperature of the calculated temperature profile exceeds a predefined maximum temperature ($\vartheta_3$) within the duration to be expected of the new load state and/or the new operating state, and characterized
    1.8 in that, in the case of a change of the operating state from a switched-on to a switched-off state of the primary drive machine (3), a start-up temperature profile of heating in the case of starting up of the drive train is additionally calculated in a manner which is based on the load state at the time of the switch-off, from which start-up temperature profile a maximum occurring start-up temperature difference is determined, waiting until the calculated temperature profile has reached an enabling temperature which undershoots the maximum temperature by at least the start-up temperature difference being carried out before the enabling of renewed starting up of the drive train (1) .

2. Method according to Claim 1, **characterized in that**, moreover, a warning signal and/or a stop signal for the primary drive machine (3) are/is output if the actual temperature becomes greater than that value of the calculated temperature profile which corresponds to it.

3. Method according to Claim 1, **characterized in that** reaching of the enabling temperature takes place by way of a comparison of the respectively actually detected temperature with the corresponding value of the calculated temperature profile.

4. Method according to Claim 1, **characterized in that** reaching of the enabling temperature is monitored by way of a timer, the timer ($t_{Abschalt}$) being started in the case of switching off, a check first of all being made in the case of renewed starting up of the primary drive machine (3) as to whether the timer ($t_{Abschalt}$) has reached a time value ($t_{Kühl}$), at which the calculated temperature profile reaches the enabling temperature.

5. Method according to Claim 1, **characterized in that** reaching of the enabling temperature is monitored by way of a timer, the timer ($t_{Abschalt}$) being started in the case of switching off, a check first of all being made in the case of renewed starting up of the primary drive machine (3) as to whether the timer ($t_{Abschalt}$) has reached a time value ($t_{Kühl}$) which is looked up in characteristic curves and/or characteristic diagrams on the basis of previous measurements and/or simulation values, in a manner which is dependent on an ambient temperature, a temperature at the time of the switch-off and/or a load ($P_{Last}$) of the work machine (5).

6. Method according to one of Claims 1 to 5, **characterized in that** the ambient temperature of the hydrodynamic coupling (2) is taken into consideration in the case of the calculation of the temperature profile.

7. Method according to one of Claims 1 to 6, **characterized in that** the actual temperature value which is detected by the temperature detection device is corrected by way of a correction value in a manner which is dependent on the temperature gradient which occurs.

8. Method according to Claim 7, **characterized in that** the correction value is selected proportionally with respect to the temperature gradient.

9. Method according to one of Claims 1 to 8, **characterized in that**, from a maximum operating temperature ($\vartheta_1$), the loading of the hydrodynamic coupling (2) is reduced by way of a decrease of a drive power and/or a load, the maximum operating temperature ($\vartheta_1$) being lower than the maximum temperature ($\vartheta_3$).

10. Method according to Claim 9, **characterized in that** a complete reduction of the load takes place from a warning temperature ($\vartheta_2$) which is specified as greater than the maximum operating temperature ($\vartheta_1$) and lower than the maximum temperature ($\vartheta_3$).

11. Method according to one of Claims 1 to 10, **characterized in that** the hydrodynamic coupling (2) is secured via a fusible safety plug (20) which has a design temperature above the maximum temperature ($\vartheta_3$).

12. Method according to one of Claims 1 to 11, **characterized in that** the measurement of the temperature ($\vartheta_{VTK}$) of the hydrodynamic coupling (2) takes place via a measurement in the hydrodynamic coupling (2) and a contactless transmission of the measured value into a stationary evaluation unit (8).


**Revendications**

1. Procédé pour faire fonctionner une chaîne cinématique (1), comprenant

   1.1 une machine d'entraînement primaire (3) ;
   1.2 une machine de travail (5) entraînée par celle-ci ;
   1.3 un accouplement hydrodynamique (2) entre la machine d'entraînement (3) et la machine de travail (5) ;
   1.4 un dispositif de détection de température pour détecter la température dans l'accouplement hydrodynamique (2),
   1.5 au moins dans le cas d'un changement d'état de charge et/ou d'état de fonctionnement de la chaîne cinématique (1), la température de l'accouplement hydrodynamique (2) étant détectée à l'instant du changement,
   1.6 une évolution de la température attendue étant calculée à partir de la température détectée ainsi que du nouvel état de charge et/ou du nouvel état de fonctionnement de la chaîne cinématique (1),
   1.7 un avertissement et/ou un signal d'arrêt pour la machine d'entraînement primaire (3) étant émis lorsque la température de l'évolution de température calculée à l'intérieur de la durée attendue du nouvel état de charge et/ou du nouvel état de fonctionnement dépasse une température maximale prédéfinie ($\vartheta_3$) et
   **caractérisé en ce que**
   1.8 dans le cas d'un changement de l'état de fonctionnement d'un état connecté à un état déconnecté de la machine d'entraînement primaire (3) sur la base de l'état de charge à l'instant de la déconnexion, on calcule en outre une évolution de la température de démarrage d'un chauffage dans le cas d'un démarrage de la chaîne cinématique, à partir de laquelle on détermine une différence de température de démarrage maximale produite, et avant le lancement d'un nouveau démarrage de la chaîne cinématique (1), on attend jusqu'à ce que l'évolution de la température calculée ait atteint une température de lancement qui est passe en dessous de la température maximale d'au moins la différence de température de démarrage.

2. Procédé selon la revendication 1, **caractérisé en ce qu'**un avertissement et/ou un signal d'arrêt pour la machine d'entraînement primaire (3) est en outre émis lorsque la température actuelle devient supérieure à la valeur lui correspondant de l'évolution de la température calculée.

3. Procédé selon la revendication 1, **caractérisé en ce que** l'obtention de la température de lancement est atteinte par une comparaison de la température à chaque fois détectée actuellement avec la valeur correspondante de l'évolution de la température calculée.

**4.** Procédé selon la revendication 1, **caractérisé en ce que** l'obtention de la température de lancement est surveillée par une minuterie, la minuterie ($t_{déconnexion}$) étant lancée au moment de la déconnexion, et l'on vérifie d'abord, lors du redémarrage de la machine d'entraînement primaire (3), si la minuterie ($t_{déconnexion}$) a atteint une valeur temporelle ($t_{refroidissement}$) à laquelle l'évolution de la température calculée atteint la température de lancement.

**5.** Procédé selon la revendication 1, **caractérisé en ce que** l'obtention de la température de lancement est surveillée par une minuterie, la minuterie ($t_{déconnexion}$) étant lancée au moment de la déconnexion, et l'on vérifie d'abord, lors du redémarrage de la machine d'entraînement primaire (3), si la minuterie ($t_{déconnexion}$) a atteint une valeur temporelle ($t_{refroidissement}$) qui, en fonction d'une température de l'environnement, d'une température à l'instant de la déconnexion et/ou d'une charge ($P_{charge}$) de la machine de travail (5), est consignée dans des courbes caractéristiques ou des champs caractéristiques sur la base de mesures préalables et/ou de valeurs de simulation.

**6.** Procédé selon l'une quelconque des revendications 1 à 5, **caractérisé en ce que** lors du calcul de l'évolution de la température, la température de l'environnement de l'accouplement hydrodynamique (2) est prise en compte.

**7.** Procédé selon l'une quelconque des revendications 1 à 6, **caractérisé en ce que** la valeur de température actuelle détectée par le dispositif de détection de température est corrigée avec une valeur de correction en fonction du gradient de température se produisant.

**8.** Procédé selon la revendication 7, **caractérisé en ce que** la valeur de correction est sélectionnée proportionnellement au gradient de température.

**9.** Procédé selon l'une quelconque des revendications 1 à 8, **caractérisé en ce qu'**à partir d'une température de fonctionnement maximale ($\vartheta_1$), la charge de l'accouplement hydrodynamique (2) est réduite par une réduction d'une puissance d'entraînement et/ou d'une charge, la température de fonctionnement maximale ($\vartheta_1$) étant inférieure à la température maximale ($\vartheta_3$).

**10.** Procédé selon la revendication 9, **caractérisé en ce que** dans le cas d'une température d'avertissement ($\vartheta_2$) qui est prédéfinie de manière à être supérieure à la température de fonctionnement maximale ($\vartheta_1$) et inférieure à la température maximale ($\vartheta_3$), il se produit une réduction complète de la charge.

**11.** Procédé selon l'une quelconque des revendications 1 à 10, **caractérisé en ce que** l'accouplement hydrodynamique (2) est sécurisé par le biais d'une vis à fusible de protection (20) qui est conçue pour une température au-dessus de la température maximale ($\vartheta_3$).

**12.** Procédé selon l'une quelconque des revendications 1 à 11, **caractérisé en ce que** la mesure de la température ($\vartheta_{VTK}$) de l'accouplement hydrodynamique (2) s'effectue par le biais d'une mesure dans l'accouplement hydrodynamique (2) et d'un transfert sans contact de la valeur de mesure dans une unité d'analyse stationnaire (8).

Fig. 1

Schritt

| 1 | START |

| 2 | Wartezeit Initialisierung |

| 3 | Überprüfung Abkühlzeit nach evtl. Abschaltung |

| 4 | Überprüfung Funktion Auswertegerät |

| 5 | START E-MOTOR |

| 6 | Wartezeit Anlaufüberbrückung |

| 7 | Überprüfung Temperatursignal auf Plausibilität |

| 8 | Überprüfung min. Anfahrtemperaturdifferenz für die ersten 5s |

| 9 | Fallunterscheidung: Anfahren/Blockage — Nennbetrieb |

| 10 | Korrektur Temperatursignal |

| 11 | JA — Temperatur Anfahren/Blockage OK? — NEIN | 12 — Temperatur Nennbetrieb OK? — JA / NEIN |

| 13 | STOP E-MOTOR |

Fig. 2

**Fig. 3a**

Fig. 3b

EP 3 049 688 B1

# Fig. 3c

Fig. 3c.1

Fig. 3c.2

Fig. 3c.1

WARNUNG
stark erhöhte
Temperatur,
aber Abkühlung
der Kupplung

JA

$\vartheta_{VTK}$
$\geq\vartheta_2$

$\vartheta_{VTK}$
$\geq\vartheta_2$

JA

WARNUNG
stark erhöhte
Temperatur,
Belastung
wegnehmen

NEIN

NEIN

STOP TIMER $t_{n\vartheta2}$
SET TIMER $t_{n\vartheta2}=0$

STOP TIMER $t_{n\vartheta2}$
SET TIMER $t_{n\vartheta2}=0$

START TIMER $t_{n\vartheta2}$

START TIMER $t_{n\vartheta2}$
Belastung wegnehmen

|12|

NEIN

$t_{n\vartheta2}$
<5min

$t_{n\vartheta2}$
<5min

NEIN

STOP E-MOTOR
SET $M_{heiß}=1$
START TIMER $t_{Abschalt}$
STOP TIMER $t_{Start}$
SET TIMER $t_{Start}=0$
STOP TIMER $t_{Block}$
SET TIMER $t_{Block}=0$
STOP TIMER $t_{n\vartheta1}$
SET TIMER $t_{n\vartheta1}=0$
STOP TIMER $t_{n\vartheta2}$
SET TIMER $t_{n\vartheta2}=0$
STOP TIMER $t_{Überbrück}$
SET TIMER $t_{Überbrück}=0$

JA

JA

JA

$\vartheta_{VTK}$
$\geq\vartheta_3$

$\vartheta_{VTK}$
$\geq\vartheta_3$

JA

STOP E-MOTOR
SET $M_{heiß}=1$
START TIMER $t_{Abschalt}$
STOP TIMER $t_{Start}$
SET TIMER $t_{Start}=0$
STOP TIMER $t_{Block}$
SET TIMER $t_{Block}=0$
STOP TIMER $t_{n\vartheta1}$
SET TIMER $t_{n\vartheta1}=0$
STOP TIMER $t_{n\vartheta2}$
SET TIMER $t_{n\vartheta2}=0$
STOP TIMER $t_{Überbrück}$
SET TIMER $t_{Überbrück}=0$

NEIN

NEIN

ALARM
Anlage wurde
abgeschaltet

ALARM
Anlage wurde
abgeschaltet

|13|

D

C

C

D

|13|

**Fig. 3c.2**

10: Drehzahl E-Mot.
11: Drehmoment E-Mot.
12: Drehmoment VTK
13: Lastdrehzahl
14: Drehmoment Last
15: Temperatur VTK
16: 38s
17: $\Delta\vartheta_{\text{Anfahr, min}}$ = 58K

**Fig. 4**

19: $t_{\text{Kühl}}$ = 7000s

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006358 B4
- DE 102994006358 A1

- WO 03087614 A